# EUROPÄISCHE PATENTSCHRIFT

(11) **EP 0 546 429 B1**
(45) Veröffentlichungstag und Bekanntmachung des Hinweises auf die Patenterteilung: **20.09.1995**
(21) Anmeldenummer: 92120514.2
(22) Anmeldetag: 02.12.1992
(51) Int. Cl.: B60H 1/00

(54) **Verfahren und Vorrichtung zur automatischen Regelung einer Heizungs-/Klimaanlage in einem Kraftfahrzeug**
Method and apparatus for the automatic control of a heating/air-conditioning system in a motor vehicle
Méthode et dispositif de réglage automatique d'une installation de chauffage/climatisation dans une voiture automobile

(30) Priorität: 13.12.1991 DE 4141137; 10.11.1992 DE 4237847
(43) Veröffentlichungstag der Anmeldung: 16.06.1993
(73) Patentinhaber: IVECO MAGIRUS AG, D-89079 Ulm (DE)
(72) Erfinder: Bartsch, Erhard, W-7916 Nersingen (DE); Görtler, Thomas, W-7912 Weissenhorn (DE)
(74) Vertreter: TER MEER STEINMEISTER & PARTNER GbR

(56) Entgegenhaltungen:
- EP-A- 0 130 528
- US-A- 4 602 675
- US-A- 4 962 302
- PATENT ABSTRACTS OF JAPAN vol. 11, no. 034 (M-558)31. Januar 1987 & JP-A-61 202 914 (NIPPON DENSO CO LTD) 8. September 1986
- PATENT ABSTRACTS OF JAPAN vol. 12, no. 409 (M-758)28. Oktober 1988 & JP-A-63 149 214 (HITACHI LTD) 22. Juni 1988
- PATENT ABSTRACTS OF JAPAN vol. 12, no. 247 (M-717)(3094) 13. Juli 1988 & JP-A-63 034 216 (NIPPON DENSO CO LTD) 13. Februar 1988
- PATENT ABSTRACTS OF JAPAN vol. 11, no. 175 (M-596)5. Juni 1987 & JP-A-62 008 815 (NIPPON DENSO CO LTD) 16. Januar 1987
- PATENT ABSTRACTS OF JAPAN vol. 12, no. 251 (M-718)15. Juli 1988 & JP-A-63 038 014 (NISSAN SHATAI CO LTD) 18. Februar 1988
- PATENT ABSTRACTS OF JAPAN vol. 15, no. 501 (M-1193)18. Dezember 1991 & JP-A-03 220 018 (ZEXEL CORP) 27. September 1991

## Beschreibung

Die Erfindung betrifft ein Verfahren und eine Vorrichtung zur automatischen Regelung einer Heizungs-/Klimaanlage in einem Kraftfahrzeug mit automatischer Ansteuerung einer Luftverteilungsvorrichtung über einen Mikro-Computer.

Aus DE 35 26 518 C2 ist ein Regelverfahren und eine Regelvorrichtung der vorgenannten Art bekannt, bei der zwar eine automatische Ansteuerung von Luftverteilerklappen als Ausgangssignal eines Mikro-Computers gegeben ist. Die Luftklappen sind aber untereinander zumindest teilweise mechanisch gekoppelt und mithin einzeln nicht regelbar. Die bekannte automatische Heizungs- und Klimaregelung hat den Nachteil, daß bei den mehr oder weniger linear absinkenden Ausblastemperaturen abhängig von verschiedenen Eingangsparametern wie z.B. Außentemperatur, etc., die Temperatur in der gesamten Fahrgastzelle proportional mit abgesenkt wird. Dieses gleichzeitige Absenken (oder Erhöhen) der Temperaturen im gesamten Fahrgastzellenraum wird vor allem über längere Zeit als sehr unangenehm empfunden und führt zu einer Umkehrung der Luftschichtung in der Kabine.

Aufgabe der Erfindung ist die Schaffung eines Verfahrens und einer Vorrichtung zum automatischen Regeln einer Heizungs-/Klimaanlage in einem Kraftfahrzeug der eingangs genannten Art, wobei in der gesamten Fahrgastzelle auch über einen längeren Zeitraum betrachtet ein sehr angenehmes Klima mit Hilfe einfacher Maßnahmen eingerichtet wird.

Gelöst wird die der Erfindung zugrundeliegende Aufgabe durch ein automatisches Regelverfahren, welches sich dadurch kennzeichnet, daß durch den Mikro-Computer auf Basis von Einflußparametern eine einzige rechnerische Ausblastemperatur ermittelt, und daß die rechnerisch ermittelte Ausblastemperatur in einem vorgegebenen Ausblastemperaturbereich von insbesondere 10° bis 35°C entsprechend einer ersten vorgegebenen Temperaturkurve und zumindest einer zweiten vorgegebenen Temperaturkurve automatisch gesplittet bzw. zweigeteilt wird, wobei die vorwiegend für den Kabinenfußraum relevante gesplittete erste Ausblastemperatur höher ist als die vorwiegend für den Kabinenkopfraum relevante gesplittete zweite Ausblastemperatur.

Für eine automatische Splittung wird insbesondere die Luftverteilungsvorrichtung vom Mikro-Computer in Abhängigkeit von der rechnerisch ermittelten Ausblastemperatur angesteuert, wobei die Ansteuerung der Luftverteilungsvorrichtung insbesondere vielstufig oder stufenlos erfolgt.

Zweckmäßigerweise ist vorgesehen, über eine Regeleinrichtung die für den Fußraum relevante gesplittete erste Ausblastemperatur auf einem konstanten höheren Temperaturniveau mit insbesondere konstanter Luftausblasmenge zu halten, während die gesplittete zweite Ausblastemperatur bei Herstellung eines thermodynamischen Gleichgewichts bzw. Herstellung einer konstanten Energiebilanz entsprechend erniedrigt wird.

Erste und zweite Temperaturkurve sind insbesondere so ausgestaltet, daß diese außerhalb des Splittungstemperaturbereiches von ca. 10° bis ca. 35°C identisch und insbesondere linear ansteigend sind. Hierbei sind lineare identische Kurvenbereiche unterhalb des Splittungsbereiches von ca. 10° in der Verlängerung der linearen identischen Kurvenbereiche oberhalb des Splittungsbereiches von ca. 35° gelegen.

Eine erfindungsgemäße Regelungsvorrichtung bzw. Heizungs- bzw. Klimaanlage kennzeichnet sich dadurch, daß der wesentliche Teil der Luftverteilungsvorrichtung die Luftmischklappe (Bypass- oder Bilevel-Klappe) einer (an sich bekannten) Heizungs-/Klimaanlage ist, wobei die Luftmischklappe durch den Mikro-Computer in Abhängigkeit der rechnerisch ermittelten Ausblastemperatur insbesondere vielstufig oder stufenlos angesteuert ist und über die Bypass-Leitung der Luftmischklappe eine entsprechende zusätzliche Kaltluftmenge in den Kopfbereich einer Fahrzeugkabine gelangt.

Durch die Erfindung wird ein Verfahren und eine Vorrichtung geschaffen, mit dem bzw. der unter Berücksichtigung der verschiedenen, für ein behagliches Klima innerhalb einer Fahrgastzelle relevanten Einflußparameter eine automatische, mit einer Luftverteilungsvorrichtung gekoppelten Temperaturverteilung erfolgt. Diese automatische Temperaturverteilung entspricht weitgehenst dem menschlichen Behaglichkeitsgefühl (kalter Kopfbereich und warmer Fußbereich) und ermöglicht einen angenehmen und ermüdungsarmen Aufenthalt in einer Fahrgastzelle. Bei bekannten automatischen Heizungs- und Klimaregelungen werden bei den dort mehr oder weniger linear absinkenden Ausblastemperaturen abhängig von den verschiedenen Eingangsparametern auch die Temperaturen im Fußraum der Fahrgastzelle proportional mit abgesenkt. Gerade dieses Absinken der Fußraumtemperaturen vor allem über längere Zeit wird sehr unangenehm empfunden und führt zu einer Umkehrung der Luftschichtung in der Kabine. Erfindungsgemäß wird also die Fußraumtemperatur durch Splittung der Ausblastemperaturen erhöht.

Insbesondere durch einen frei programmierbaren Mikro-Computer können auch individuelle Wünsche der Fahrzeuginsassen berücksichtigt werden oder die Regelcharakteristik (Temperatur- und Luftverteilung) auf extreme klimatische Bedingungen abgestimmt werden.

Aus US-PS 4 602 675 ist ein Verfahren zur automatischen Regelung einer Heizungs-/Klimaanlage in einem Kraftfahrzeug bekannt, bei der zur Definition der kalten und der warmen Luft sowie deren Verteilung in der Fahrerhauskabine unter anderem vier Sensoren benötigt werden. Demgegenüber wird bei der Erfindung durch den Mikrocomputer auf Basis der Einflußparameter eine einzige rechnerische Ausblastemperatur ermittelt, die sich lediglich in einem ganz bestimmten Bereich splittet.

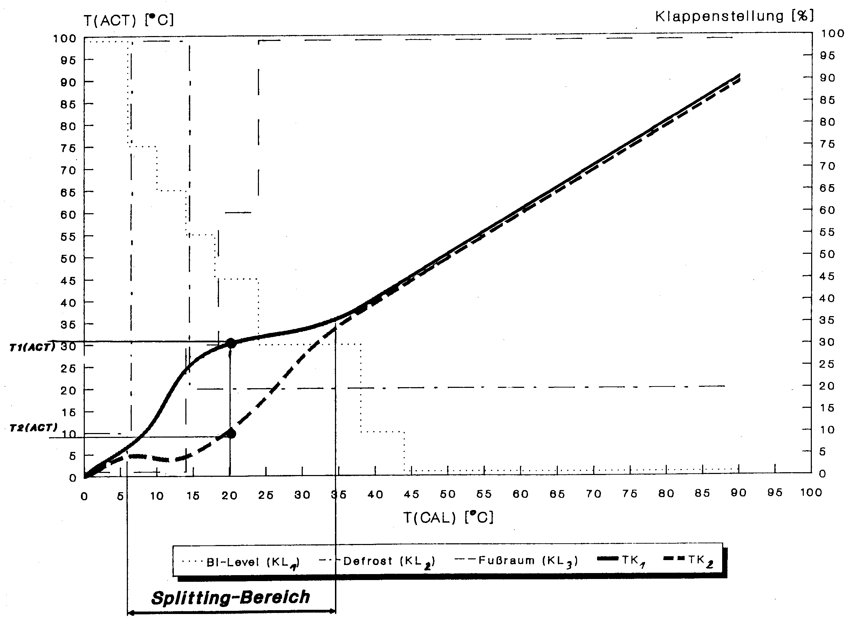

Die Erfindung wird nachfolgend anhand eines Ausführungsbeispiels unter Bezugnahme auf die beigefügte Zeichnung näher erläutert.

Die aus einer einzigen Figur bestehende Zeichnung zeigt schematisch Temperaturkurven TK₁ und TK₂, welche dem Fußraum bzw. dem Kopfraum einer Fahrgastzelle zugeordnet sind und gleichermaßen der entsprechenden relativen Klappenstellung [%] eine Luftmischklappe einer Heizungs-/Klimaanlage entsprechen. Die Temperaturkurven TK₁ und TK₂ bzw. Klappenstellungen sind in Abhängigkeit der von einem Mikro-Computer rechnerisch ermittelten Ausblastemperatur T_{CAL} dargestellt (Abszisse). Auf der Ordinate ist die gesplittete aktuelle Ausblastemperatur aufgetragen.

Unter Berücksichtigung verschiedener, für eine Kabinentemperaturkalkulation relevanter Einflußparameter wird mittels eines Mikro-Computers als wesentlicher Ausgangsparameter die Ausblastemperatur T_{CAL} rechnerisch ermittelt.

Durch Messungen hat sich ergeben, daß Ausblastemperaturen unter ca. 35°C im Fußraum als subjektiv unangenehm bzw. zu kalt empfunden werden.

Dieser Erkenntnis wird Rechnung getragen durch Splittung der Ausblastemperatur in zwei Temperaturkurven TK₁ und TK₂. Es ist also eine erste Ausblastemperaturkurve TK₁ vorwiegend für den Fußraum und eine zweite Ausblastemperaturkurve TK₂ vorwiegend für den Kopfraum relevant.

Bei Ausblastemperaturen größer als ca. 35° verlaufen beide Kurven linear (Heizbetrieb). Ebenso bei Ausblastemperatur kleiner als ca. 10°C (insbesondere ca. 8°C) wird ein linearer Temperaturverlauf aus thermodynamischen Gründen realisiert (Klimabetrieb).

Im Ausblastemperaturbereich von ca. 10°C bis ca. 35° (insbesondere 45°C) (Reheat, d.h. Heizungs- und Klimabetrieb) sind die beiden an sich sonst identischen Temperaturkurven zweigeteilt oder gesplittet.

Die für den Fußraum relevante Ausblastemperatur T₁ _{ACT} wird von der automatischen Temperaturregelung in diesem Bereich erhöht bzw. auf diesem höheren Level gehalten. Die Ausblastemperatur T₂ _{ACT} für den Kopfraum hingegen wird in diesem Bereich entsprechend erniedrigt, um somit das thermodynamische Gleichgewicht wieder herzustellen.

Die der Erfindung zugrundeliegende Splittung der aktuellen Ausblastemperatur T_{ACT} der Zeichnung wird also erreicht durch eine von einem Mikro-Computer kalkulierte Ausblastemperatur T_{CAL} und eine zugeordnete , automatische , vom Mikro-Computer gesteuerte Luftverteilung⁺in der Kabine.
⁺ (Luftverteilungsvorrichtung, nämlich Bilevel-Klappe KL₁, Defroster- bzw. Scheibenklar-Klappe(n) KL₂ und Fußausström-Klappe(n) KL₃)

Das Kernstück dieser Luftverteilung ist eine Luftmischklappe KL₁ (sog. Bypass- oder Bilevel-Klappe), mittels derer kältere Luft in den oberen Fahrerhausbereich (Kopfraum) gelangt. Die Ansteuerung der Luftmischklappe erfolgt insbesondere vielstufig (Multistep) oder stufenlos ebenfalls vom Mikro-Computer und ist abhängig von der kalkulierten Ausblastemperatur T_{CAL}.

Sämtliche in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.
⁺ (KL₁, KL₂, KL₃)

## Patentansprüche

1. Verfahren zur automatischen Regelung einer Heizungs-/Klimaanlage in einem Kraftfahrzeug mit automatischer Ansteuerung einer Luftverteilungsvorrichtung⁺über einen Mikro-Computer,
dadurch gekennzeichnet,
daß durch den Mikro-Computer auf Basis von Einflußparametern eine einzige rechnerische Ausblastemperatur T_{CAL} ermittelt, und daß die rechnerisch ermittelte Ausblastemperatur T_{CAL} in einem vorgegebenen Ausblastemperaturbereich von insbesondere 10° bis 35°C entsprechend einer ersten vorgegebenen Temperaturkurve TK₁ und zumindest einer zweiten vorgegebenen Temperaturkurve (TK₂) automatisch gesplittet bzw. zweigeteilt wird, wobei die vorwiegend für den Kabinenfußraum relevante gesplittete erste Ausblastemperatur T₁ _{ACT} höher ist als die vorwiegend für den Kabinenkopfraum relevante gesplittete zweite Ausblastemperatur T₂ _{ACT}.

2. Verfahren nach Anspruch 1,
dadurch gekennzeichnet,
daß für eine automatische Splittung die Luftverteilungsvorrichtung vom Mikro-Computer in Abhängigkeit von der rechnerisch ermittelten Ausblastemperatur T_{CAL} angesteuert wird.

3. Verfahren nach Anspruch 2,
dadurch gekennzeichnet,
daß die Ansteuerung der Luftverteilungsvorrichtung vielstufig oder stufenlos erfolgt.

4. Verfahren nach einem der Ansprüche 1 bis 3,
dadurch gekennzeichnet,
daß über eine Regeleinrichtung die für den Fußraum relevante gesplittete erste Ausblastemperatur T₁ _{ACT} auf einem konstanten höheren Temperaturniveau mit insbesondere konstanter Luftausblasmenge gehalten wird, während die gesplittete zweite Ausblastemperatur T₂ _{ACT} bei Herstellung eines thermodynamischen Gleichgewichts bzw. konstanter Energiebilanz entsprechend erniedrigt wird.

5. Verfahren nach einem der Ansprüche 1 bis 4,
dadurch gekennzeichnet,
daß die erste und die zweite Temperaturkurve(TK₁ und TK₂) außerhalb des Splittungstemperaturbereiches von ca. 10° bis 35°C identisch und insbesondere linear ansteigend sind.

6. Verfahren nach Anspruch 5,
dadurch gekennzeichnet,
daß die linearen identischen Kurvenbereiche unterhalb des Splittungstemperaturbereiches von ca. 10°C in der Verlängerung der linearen identischen Kurvenbereiche oberhalb des Splittungsbereiches von ca. 35° liegen.

7. Heizungs-/Klimaanlage in einem Kraftfahrzeug mit automatischer Temperaturregelung nach einem der Ansprüche 1 bis 6,
dadurch gekennzeichnet,
daß der wesentliche Teil der Luftverteilungsvorrichtung die Luftmischklappe (Bypass- oder Bilevel-Klappe KL₁) einer (an sich bekannten) Heizungs-/Klimaanlage ist, wobei die Luftmischklappe durch den Mikro-Computer in Abhängigkeit der rechnerisch ermittelten Ausblastemperatur (T_{CAL}) insbesondere vielstufig oder stufenlos angesteuert ist und über die Bypass-Leitung der Luftmischklappe eine entsprechende zusätzliche Kaltluftmenge in den Kopfbereich einer Fahrzeugkabine gelangt.

8. Heizungs-/Klimaanlage in einem Kraftfahrzeug mit automatischer Temperaturregelung nach Anspruch 7,
dadurch gekennzeichnet,
daß der übrige Teil der Luftverteilungsvorrichtung, beispielsweise die Scheibenklar-Klappe(n) (KL₂) und die Fußausström-Klappe(n) (KL₃), durch den Mikrocomputer in Abhängigkeit von der rechnerisch ermittelten Ausblastemperatur (T_{CAL}) insbesondere vielstufig oder stufenlos angesteuert ist derart, daß die Temperaturschichtung im Fahrerhaus beibehalten wird.

## Claims

1. A method for the automatic control of a heating/air-conditioning unit in a motor vehicle with automatic activation of an air-distribution device (KL₁, KL₂, KL₃) via a microcomputer, characterized in that a single rated outlet temperature T_{CAL} is determined by the microcomputer on the basis of influential parameters, and in that the computer-determined outlet temperature T_{CAL} in a predetermined outlet temperature range of, in particular 10° to 35°C, is automatically split into a plurality in accordance with a first predetermined temperature curve TK₁ and at least a second predetermined temperature curve (TK₂), wherein the split first outlet temperature T₁ _{ACT} which is preponderantly relevant to the foot region of the cab is higher than the split second outlet temperature T₂ _{ACT} which is preponderantly relevant to the head region of the cab.

2. A method according to Claim 1, characterized in that for automatic splitting the air-distribution device is activated by the microcomputer as a function of the outlet temperature T_{CAL} determined by computer.

3. A method according to Claim 2, characterized in that the activation of the air-distribution device is effected in a plurality of stages or steplessly.

4. A method according to any one of Claims 1 to 3, characterized in that via a control device the split first outlet temperature T₁ _{ACT} relevant to the foot region is maintained at a constant higher temperature level with in particular a constant air-outlet volume, whereas the split second temperature outlet temperature T₂ _{ACT} is reduced accordingly when a thermodynamic equilibrium or constant energy balance is established.

5. A method according to any one of Claims 1 to 4, characterized in that the first and second temperature curves (TK₁ and TK₂) are identical and, in particular, linearly rising when outside the splitting temperature range of approximately 10° to 35°C.

6. A method according to Claim 5, characterized in that the linear identical curve zones lies below the splitting temperature range of approximately 10° in the extension of the linear identical curve zones above the splitting range of approximately 35°.

7. A heating/air-conditioning unit in a motor vehicle with automatic temperature control according to any one of Claims 1 to 6, characterized in that the essential part of the air-distribution device is the air-mixing flap (bypass or bilevel flap KL₁) of a (per se known) heating/air-conditioning unit, wherein the air-mixing flap is activated, particularly in a plurality of stages or steplessly, by the microcomputer as a function of the computer-determined outlet temperature (T_{CAL}) and via the bypass line of the air-mixing flap a corresponding additional volume of cold air enters the head region of a vehicle cab.

8. A heating/air-conditioning unit in a motor vehicle with automatic temperature control according to Claim 7, characterized in that the remaining part of the air-distribution device, for example the screen-clearing flaps (KL₂) and the foot-outflow flaps (KL₃), is activated, particularly in a plurality of stages or steplessly, by the microcomputer as a function of the computer-determined outlet temperature (T_{CAL}) in such a way that the temperature stratification in the cab is maintained.

## Revendications

1. Procédé de régulation automatique d'une installation de chauffage/climatisation d'un véhicule automobile à commande automatique d'un dispositif de distribution d'air (KL₁, KL₂, KL₃) par un micro-ordinateur, caractérisé en ce que, sur la base des paramètres d'influence, le micro-ordinateur détermine par le calcul une seule température d'éjection d'air (T_{CAL}) et cette température d'éjection d'air (T_{CAL}) déterminée par le calcul est divisée en deux dans une plage prédéterminée de températures de l'air d'éjection, notamment entre 10°C et 35°C selon une première courbe de température (T_{K1}) prédéterminée et au moins une seconde courbe de température (T_{K2}) prédéterminée, automatiquement, et la première température d'éjection d'air (T₁ _{ACT}), divisée, notamment pour la partie de l'habitacle occupé par les pieds, est supérieure à la seconde température d'éjection d'air (T₂ _{ACT}), divisée, déterminante pour la partie de l'habitacle occupée par la tête.

2. Procédé selon la revendication 1, caractérisé en ce que pour une division automatique, le dispositif de répartition d'air est commandé par le micro-ordinateur en fonction de la température d'éjection d'air (T_{cal}) déterminée par calcul.

3. Procédé selon la revendication 2, caractérisé en ce que la commande du dispositif de répartition d'air se fait par échelons multiples ou de manière continue.

4. Procédé selon l'une des revendications 1 à 3, caractérisé en ce que, par une installation de régulation, on maintient la première température d'éjection d'air (T₁ _{ACT}), divisée, déterminante pour la partie de l'habitacle occupée par les pieds, à un niveau de température constant, plus élevé, avec un débit d'air éjecté, notamment constant, alors que la seconde température d'éjection (T₂ _{ACT}), divisée, est maintenue à un niveau plus faible, correspondant, en réalisant un équilibre thermodynamique ou un bilan énergétique constant.

5. Procédé selon l'une des revendications 1 à 4, caractérisé en ce que la première et la seconde courbe de température (TK₁, TK₂) à l'extérieur de la plage de températures de division, comprise entre environ 10°C et 35°C sont identiques et notamment croissantes linéairement.

6. Procédé selon la revendication 5, caractérisé en ce que les plages de courbes identiques linéaires en dessous de la plage de températures de division pour une température d'environ 10°C se situent dans le prolongement de la plage de courbe linéaire, identique, au-dessus de la plage de division, au-delà de la température d'environ 35°C.

7. Installation de chauffage/climatisation d'un véhicule automobile à régulation automatique de la température selon l'une des revendications 1 à 6, caractérisée en ce que la partie essentielle du dispositif de répartition de l'air est le volet de mélange d'air (volet de dérivation ou volet à deux niveaux ( KL₁), d'une installation de chauffage/climatisation (connue en soi), le volet de mélange d'air étant commandé par le micro-ordinateur en fonction de la température d'éjection d'air (T_{CAL}) déterminée par le calcul, notamment par une commande à nombreux échelons ou de manière continue, et par la conduite de dérivation du volet de mélange d'air, une quantité complémentaire correspondante d'air froid arrive dans la partie de l'habitacle du véhicule occupée par la tête.

8. Installation de chauffage/climatisation d'un véhicule automobile à régulation automatique de la température selon la revendication 7, caractérisé en ce que l'autre partie du dispositif de répartition d'air, par exemple le ou les volet(s) de désembuage des vitres (KL₂) et le ou les volets d'éjection d'air au niveau des pieds (KL₃) sont commandés par le micro-ordinateur en fonction de la température d'éjection d'air (T_{CAL}) déterminée par calcul, par une commande, notamment à échelons multiples, ou commande continue pour conserver la stratification des températures dans l'habitacle.
